# EUROPÄISCHE PATENTANMELDUNG

(11) **EP 4 811 574 A1**
(43) Veröffentlichungstag der Anmeldung: **23.09.2026**
(21) Anmeldenummer: 26163506.4
(22) Anmeldetag: 10.03.2026
(51) Int. Cl.: H02G 1/14, H02G 15/10

(54) **LEITUNGSVERBINDUNG VON ZUMINDEST ZWEI ELEKTRISCHEN LEITUNGEN SOWIE VERFAHREN ZUR HERSTELLUNG EINER SOLCHEN LEITUNGSVERBINDUNG UND FORMSTABILER KABELSATZ**

(30) Priorität: 21.03.2025 DE 102025111128
(71) Anmelder: LEONI Bordnetz-Systeme GmbH, 97318 Kitzingen (DE)
(72) Erfinder: BERGMANN-HERZOG, Maria, 97241 Bergtheim - OT Opferbaum (DE); DEHN, Manfred, 97318 Kitzingen (DE); LUNGE, Matthias, 26939 Ovelgönne (DE)
(74) Vertreter: FDST Patentanwälte

(57) **Zusammenfassung**

Die Leitungsverbindung (2) dient zum Verbinden von zumindest zwei elektrischen Leitungen (4), insbesondere Hochvolt-Leitungen (4) eines Kraftfahrzeugs, wobei die Leitungen (4) jeweils einen Leiter (6) sowie einen diese umgebenden Leitungsmantel (8) aus einem vernetzten Polyolefin oder einem vernetzten Silikon aufweisen, wobei in einem Verbindungsbereich (10) die Leiter (6) abisoliert und miteinander elektrisch leitend verbunden sind, und der Verbindungsbereich (10) sowie jeweils ein Endabschnitt (12) des Leitungsmantels (8) unmittelbar in einem aufgespritzten Spritzgussteil (14) aus einem thermoplastischen Elastomer eingebettet sind, wobei das Spritzgussteil (14) dichtend an dem Endabschnitt (12) des Leitungsmantels (8) anliegt. Hierdurch ist ohne weitere Dichtelemente eine Längswasser-Abdichtung erreicht.

## Beschreibung

Die Erfindung betrifft eine Leitungsverbindung von zumindest zwei elektrischen Leitungen, insbesondere Hochvolt-Leitungen eines Kraftfahrzeugs sowie ein Verfahren zur Herstellung einer solchen Leitungsverbindung. Die Erfindung betrifft weiterhin einen formstabilen Kabelsatz.

Beim elektrischen Verbinden zweier Leitungen muss regelmäßig speziell im Kraftfahrzeugbereich sichergestellt sein, dass die Leitungsverbindung dicht gegen äu-ßeren Umgebungseinflüssen ist. Insbesondere muss die sogenannte Längswasserdichtigkeit sichergestellt sein, an die hohe Anforderungen bestehen, da aufgrund von Kapillareffekten entlang der Längsrichtung der zu verbindenden Leitungen Feuchtigkeit in den Kontaktbereich eintreten kann.

Im Kraftfahrzeugbereich sind sogenannte Verteiler bekannt, bei der eine eingehende Leitung auf beispielsweise zwei oder auch mehrere Leitungen aufgeteilt wird. Hierzu werden beispielsweise sogenannte Y-Verbinder, auch als Y-Verteiler bezeichnet, eingesetzt.

Derartige Y-Verbinder sind beispielsweise aus der DE 10 2018 216 965 B3 oder EP 3 721 508 B1 zu entnehmen. Bei diesen Verbindern sind jeweils Gehäuseteile vorgesehen, in die die zu verbindenden Leitungen eingeführt sind. Der Eintritt der Leitungen in die Gehäuseteile ist über geeignete Dichtelemente abgedichtet. Ergänzend ist bei diesen Verteilern ein Umspritzen oder ein Vergießen vorgesehen, um die Abdichtung zu gewährleisten.

Bei Hochvoltleitungen, wie sie beispielsweise bei elektrisch angetriebenen Fahrzeugen eingesetzt werden, bestehen aufgrund der im Betrieb anliegenden hohen Spannungen und der hohen Ströme besondere Anforderungen. Unter Hochvoltleitung wird vorliegend allgemein eine Leitung verstanden, die für Spannungen von zumindest 40 V, vorzugsweise von zumindest 100 V, typischerweise von zumindest 400 V und insbesondere auch von zumindest 800 V und beispielsweise bis zu Spannungen von 1500 V ausgebildet sind. Die Leitungen sind typischerweise auch zur Übertragung von Strömen von zumindest 100 A und bevorzugt von mehreren 100 A und beispielsweise von zumindest 500 A ausgebildet. Alternativ sind die einzelnen Leitungen z.B. für die Versorgung von Nebenaggregaten für kleinere Ströme von z.B. 10A bis 60A und / oder für Ströme ab 30A ausgebildet

Derartige Hochvoltleitungen sind typischerweise als einadrige, geschirmte oder ungeschirmte Mantelleitungen ausgebildet, mit einem zentralen, typischerweise als Litzenleiter ausgebildeten Leiter, welcher von einem Leitungsmantel entweder mittelbar oder auch unmittelbar umgeben ist.

Im Automobilbereich werden weiterhin regelmäßig Kabelsätze als Teil des Bordnetzes verlegt. Diese weisen zumindest eine Leitung und typischerweise mehrere Leitungen auf, welche entlang einer vorgegebenen Verlegestruktur im Fahrzeug verlegt sind. Derartige Kabelsätze weisen häufig zumindest in Abschnitten eine Formstabilität auf, so dass der Kabelsatz als solches bereits eine gewünschte spätere Verlegestruktur zumindest teilweise einnimmt. Zur Ausbildung der Formstabilität werden häufig zumindest abschnittsweise Umspritzungen oder Umschäumungen eingesetzt.

Ausgehend hiervon liegt der Erfindung die Aufgabe zugrunde, eine Leitungsverbindung sowie einen formstabilen Kabelsatz, insbesondere bei Hochvoltleitungen anzugeben, welche kostengünstig herzustellen sind und wobei bei der Leitungsverbindung zuverlässig eine Längswasserdichtigkeit gewährleistet ist.

Die Aufgabe wird gemäß der Erfindung gelöst durch eine Leitungsverbindung von zumindest zwei und insbesondere von mehr als zwei elektrischen Leitungen, bei denen es sich insbesondere um Hochvoltleitungen eines Kraftfahrzeugs handelt, wie sie zuvor definiert wurden. Die Leitungen weisen jeweils einen typischerweise als Litzenleiter ausgebildeten Leiter sowie einen diesen mittelbar oder unmittelbar umgebenden Leitungsmantel auf. Der Leitungsmantel bildet dabei einen äußeren Leitungsmantel und damit Schutzmantel aus, der in Kontakt mit der Umgebung steht. Ein Mantelmaterial des Leitungsmantels ist ausgewählt aus einem vernetzten und zwar vorzugsweise strahlvernetzten Polyolefin und einem vernetzten Silikon. Die Leitungen sind in einem Verbindungbereich abisoliert und die freigelegten Leiter sind miteinander elektrisch leitend und typischerweise auch mechanisch verbunden. Im Hinblick auf die gewünschte Längswasser-Abdichtung sind der Verbindungsbereich und jeweils ein Endabschnitt des Leitungsmantels in einem aufgespritzten Spritzgussteil aus einem thermoplastischen Elastomer (TPE) eingebettet. Das thermoplastische Elastomer bildet also ein Gussmaterial aus, welches dichtend an dem Endabschnitt des jeweiligen Leitungsmantels anliegt, wodurch eine Längswasser-Abdichtung erreicht ist.

Die Aufgabe wird weiterhin gelöst durch ein Verfahren zur Herstellung einer derartigen Leitungsverbindung. Hierbei wird derart vorgegangen, dass zur Ausbildung des Spritzgussteils eine vorbereitete Baugruppe, nämlich der Verbindungsbereich mit den bereits elektrisch miteinander verbundenen Leitern sowie die Endabschnitte der beteiligten Leitungen, in eine Spritzgussform eingelegt wird und anschließend das thermoplastische Elastomer eingespritzt wird. In Vorbereitung für den Spritzguss-Prozess werden zunächst die Leitungen abisoliert und der Leiter von dem Leitungsmantel befreit, sodass sie als blanke Leiterenden vorliegen. Diese werden anschließend elektrisch miteinander verbunden, insbesondere miteinander verspleißt und / oder miteinander stoffschlüssig, insbesondere durch Schweißen verbunden.

Die Leitungsverbindung ist bevorzugt nach Art eines Verteilers ausgebildet, bei dem also mehr als zwei Leiter miteinander verbunden sind.

Nach Ausbildung dieser Leiterverbindung zwischen den beteiligten Leitern wird diese typischerweise einer Qualitätskontrolle unterzogen, insbesondere im Hinblick auf eventuell abstehende Litzendrähte, da diese zu einer Spitzenentladung führen können. Abstehende Litzendrähte werden vorzugsweise entfernt, beispielsweise abgeschnitten.

Untersuchungen haben gezeigt, dass eine derartig hergestellte Leitungsverbindung, bei der das Spritzgussteil auf den aus einem vernetzten Material gebildeten Leitungsmantel im Endabschnitt aufgespritzt wird, überraschenderweise bereits eine ausreichende Längswasser-Abdichtung aufweist. Dies wird durch eine ausreichende Adhäsion des Gussmaterials auf dem Material des Leitungsmantels insbesondere infolge des beim Spritzguss-Prozesses ausgeübten Druckes und kombiniert mit einer beim Herstellungsprozess auftretenden Schwindung des Gussmaterials erreicht. Die Schwindung liegt vorzugsweise im Bereich zwischen 0,5% und 2 % und insbesondere zwischen 0,8% und 1,5%.

Vernetzte Polyolefine oder auch vernetzte Silikone, wie sie vorliegend für die Leitungsmäntel eingesetzt werden, zeichnen sich dadurch aus, dass sie aufgrund Ihrer Vernetzung keine, allenfalls eine sehr reduziert chemische Haftung mit einem aufgebrachten Material eingehen können. Zumindest wird üblicherweise keine ausreichende Haftung für eine (Längs-) Wasserdichtigkeit erreicht. Es sind daher bei derartigen Mantelmaterialien regelmäßig besondere Maßnahmen erforderlich, um die notwendige Abdichtung zu erreichen.

Derartige Mantelmaterialien aus einem vernetzten Polyolefin oder einem vernetzten Silikon werden häufig für den Leitungsmantel der zuvor beschriebenen Hochvoltleitungen eingesetzt. Speziell bei derartigen Leitungsmaterialien und Hochvoltleitungen sind aufwändige Dichtungsmaßnahmen erforderlich, da sich deren Oberflächen mit herkömmlichen Gussmaterialien häufig nicht oder nur unzureichend im Hinblick auf die erforderliche Längswasserdichtigkeit verbinden.

Unter Hochvoltleitungen werden insbesondere die eingangs definierten Leitungen verstanden.

Die vorliegende Erfindung hat nun überraschenderweise festgestellt, dass durch ein Spritzgussverfahren und durch die Verwendung eines thermoplastischen Elastomers eine zuverlässige Abdichtung sich ohne weitere Maßnahmen erreichen lässt.

Bevorzugt wird für das verwendete thermoplastische Elastomer ein haftungsmodifiziertes Material eingesetzt. Hierzu wird ein an sich bekannte Modifizierung des Materials vorgenommen. So wird z.B. bei einem bevorzugt eingesetzten TPE-V, welches beispielsweise aus PP und einem EPDM besteht, das PP modifiziert, indem z.B. polare funktionelle Gruppen in das Polymer eingearbeitet wird, wie z.B. Maleinsäureanhydrid in den PP-Anteil und / oder z. B. Carboxylgruppen in den EPDM-Anteil.

Für das verwendete thermoplastische Elastomer wird insbesondere ein polarmodifiziertes thermoplastisches Elastomer eingesetzt. Durch die Polarität ist das Material in der Lage, eine verbesserte Adhäsion mit dem Mantelmaterial einzugehen. Zur Ausbildung der Polarität insbesondere beim bevorzugten TPE-V werden z.B. die zuvor genannten polaren funktionellen Gruppen eingearbeitet und z.B. ein sogenanntes Maleinsäureanhydrid-Grafting durchgeführt. Insbesondere werden dem PP-Anteil und / oder dem EPDM-Anteil polare funktionelle Gruppen beigemischt. Dies sind z.B. Carboxyl- oder Hydroxylgruppen beim EPDM. Bevorzugt sind alternativ oder ergänzend polare Additive, wie z.B. ein polares PP-Copolymer zugefügt. Durch die Polarmodifizierung erhält der ansonsten u polare EPDM - Anteil eine Polarität. Unter "polarmodifiziert" wird daher vorliegend insbesondere verstanden, dass ein im Ausgangszustand insbesondere unpolares Material durch Ergänzungen, insbesondere durch Beimischung von polaren funktionellen Gruppen eine Polarität aufweist.

Auf zusätzliche Maßnahmen zur Verbesserung der Haftung zwischen dem Material des Leitungsmantels und dem Material des Spritzgussteils kann verzichtet werden und wird vorzugsweise auch verzichtet. Insbesondere wird auf Zwischenschichten zwischen Leitungsmantel und Spritzgussteil verzichtet, beispielsweise durch Aufbringung einer geeigneten Haftvermittlerschicht oder auch einer Bandierung, über die ein besseres Anhaften zwischen den beiden Materialien erreicht werden soll. Speziell eine Bandierung würde unter Umständen eine Kapillarwirkung begünstigen, was somit nachteilig für die angestrebte Längswasser-Abdichtung ist.

Vorzugsweise wird - abgesehen von einem eventuellen Reinigungsschritt - auf insbesondere sämtliche Maßnahmen zur Einstellung der Haftung zwischen den beiden Materialien verzichtet. Insbesondere wird beispielsweise auf eine Primer-Vorbehandlung zur Verbesserung der Haftung verzichtet.

Bevorzugt wird insbesondere auf eine chemische oder sonstige Aktivierung des Leitungsmantels vor dem Aufbringen des thermoplastischen Elastomers verzichtet. Bei einer solchen chemischen Aktivierung wird das (vernetzte) Mantelmaterial derart verändert, dass es in der Lage ist eine starke chemische oder physikalische Bindung mit dem aufgebrachten Kunststoff einzugehen. Dies wird z.B. dadurch erreicht, dass ein Haftvermittler / Primer aufgetragen wird.

Bei der vorliegenden Ausgestaltung liegt vorzugsweise eine reine Adhäsionsverbindung vor, bei der also das aufgebrachte Material des Spritzgussteils keine stoffschlüssige und / oder chemische Verbindung mit dem Mantelmaterial eingeht.

Speziell bei der Materialgruppe der Polyolefine wird auf eine Bestrahlung oder Plasmabehandlung vor dem Aufbringen des thermoplastischen Elastomers vorzugsweise verzichtet.

Bei der Materialgruppe der Silikone ist demgegenüber u.U. eine derartige Bestrahlung oder Plasmabehandlung vorgesehen, um die Haftung zu verbessern. Hierbei wird das Plasma bevorzugt derart gewählt, dass lediglich die Oberfläche gereinigt wird, ohne dass eine chemische Aktivierung der Oberfläche z.B. durch Beimischung von O2 oder N2 erfolgt. Alternativ wird auch bei der Materialgruppe der Silikone auf eine Bestrahlung oder Plasmabehandlung verzichtet.

In einer Ausführungsvariante ist - insbesondere bei der Materialgruppe der Polyolefine - auf sämtliche Maßnahmen zur Einstellung der Haftung verzichtet.

Im Vergleich zu einem normalen, häufig drucklosen Gießprozess oder auch Schäumungsprozess, bei dem ein geschäumter Mantel ausgebildet wird, wird durch den hier beschriebenen Spritzguss-Prozess das Gussmaterial mit erhöhtem Druck und erhöhter Temperatur direkt auf den Leitungsmantel aufgebracht. Hierdurch wird eine gewisse, auch als Überpressung bezeichnete Presskraft erreicht, wodurch sich eine gute Flächendichtung erzielen lässt.

Die Verarbeitungstemperatur des Gussmaterials beim Spritzguss-Prozesses liegt typischerweise im Bereich zwischen 200 °C und 250 °C. Dadurch wird ein geringe Viskosität begünstigt.

Ergänzend wird die Temperatur der Werkzeugform auf einen geringen Wert von z.B. kleiner 50°C oder kleiner 40°C und z.B. auf 30°C eingestellt.

Diese hohen Temperaturen für die Spritzgussmasse liegen innerhalb einer Misch- und Dosiereinheit der Spritzgussmaschine vor. Diese liegen damit deutlich über den Temperaturen, wie sie typischerweise z.B. bei vernetzungsfähigen Materialien wie z.B. auf Silikonbasis eingesetzt werden. Bei derartigen Materialien würden nämlich derartige Temperaturen zu einer früh einsetzenden Vernetzungsreaktion beim Einspritzprozess führen, die die Viskosität negativ beeinflusst. Vielmehr soll bei diesen Materialien die Vernetzungsreaktion erst innerhalb der Werkzeugform starten, weshalb der Prozess umgekehrt funktioniert. D.h. die Die Misch und Dosiereinheit wird auf Temperaturen zwischen 0-30 Grad gehalten und erst das Werkzeug wird auf Temperaturen zwischen 100-200 °C beheizt

Der Spritzdruck liegt vorzugsweise im Bereich von 200 bar und 1200 bar. Bevorzugt beträgt der Spritzdruck zumindest 250 bar.

Durch diese Verfahrensparameter ist insgesamt auch sichergestellt, dass die Werkzeugform vollständig mit dem Gussmaterial verfüllt wird und dass sich ein massives Spritzgussteil aus Vollmaterial ohne Lunker (Lufteinschlüsse) ausbildet. Das Spritzgussteil ist daher insgesamt in bevorzugter Ausgestaltung auch lunkerfrei, weist also keine Lufteinschlüsse auf. Dies ist für den vorgesehenen Anwendungsbereich bei Hochvoltleitungen von besonderem Vorteil, um Durchschläge zu vermeiden.

Für das thermoplastische Elastomer wird bevorzugt ein Material mit hoher Strukturviskosität eingesetzt. Hierunter wird allgemein verstanden, dass die Viskosität beim Spritzgießen bei auftretenden Scherkräften reduziert wird, so dass es dünnflüssiger wird. Insbesondere durch die zuvor genannten hohen Drücke wird das Material beim Spritzgießen einer hohen Scherbelastung ausgesetzt, so dass das Material - neben der durch die hohe Spritztemperatur bedingten geringen Viskosität - ergänzend auch durch die Strukturviskosität dünnflüssig ist, so dass ein vollständiges Füllen der Werkzeugform und die Ausbildung eines lunkerfreien Spritzgussteils sichergestellt ist.

Ein Maß für die Strukturviskosität ist z.B. das Verhältnis der Nullscherviskosität (Viskosität bei Schmelze im Ruhezustand) zu der Viskosität unter Scherbeanspruchung (bei einer Schergeschwindigkeit von 1000 s⁻¹). Bevorzugt liegt dieses Verhältnis bei größer 50 und insbesondere größer 100 oder größer 150.

Ein weiterer Vorteil des hier beschriebenen Spritzguss-Prozesses gegenüber einem normalen Gießprozess oder auch Schäumungsprozess liegt in der höheren (Takt-) Geschwindigkeit bei der Herstellung. Bei einer vorgegebenen Produktionskapazität sind daher weniger Gusswerkzeuge erforderlich. Durch die höhere Taktgeschwindigkeit im Vergleich zu einem herkömmlichen Gießprozess sind die Herstellungskosten geringer.

Bei einem herkömmlichen Schäumungsprozess ist üblicherweise auch der Einsatz von Trennmittel erforderlich, um das geschäumte Bauteil aus der Werkzeugform herausnehmen zu können. Ein solches Trennmittel kann jedoch in nachteiliger Weise zu einer Reduzierung der Haftung zwischen dem Leitungsmantel und der diesen umgebenden Gussmasse führen. Bei dem hier beschriebenen Spritzguss-Prozess ist ein Trennmittel (zur Erleichterung der Entformung des Spritzgussteils aus der Werkzeugform nach dem Spritzguss-Prozess) nicht erforderlich und entsprechend auch nicht vorgesehen.

Das Spritzgussteil erstreckt sich lediglich über eine begrenzte Länge des Leitungsmantels, d. h. es ist lediglich der definierte Endabschnitt von dem Spritzgussteil überdeckt.

Das Spritzgussteil liegt zumindest abschnittsweise und vorzugsweise über zumindest weitgehend die gesamte Länge des Endabschnitts am Leitungsmantel unmittelbar dichtend an. Unter "über zumindest weitgehend die gesamte Länge" wird vorliegend ein Abschnitt von zumindest 80%, insbesondere von zumindest 90% oder auch von zumindest 95% verstanden. Hierdurch ist eine zuverlässige Abdichtung erreicht.

Als Mantelmaterial wird insbesondere ein vernetztes, insbesondere durch Bestrahlung vernetztes Polyolefin eingesetzt, wie dies heute bereits üblich ist. Beispiele hierfür sind: XPO oder auch XPE.

Als Polyolefine wird allgemein eine Gruppe von Polymeren bezeichnet, die speziell aus Alkenen, wie Ethylen, Propylen, 1-Buten oder Isobuten durch eine Polymerisation hergestellt werden. Es handelt sich bei den Polyolefinen typischerweise um gesättigte Kohlenwasserstoffe. Zu den Polyolefinen zählen als Untergruppe insbesondere auch Polyethylene, so dass also ein vernetztes Polyethylen (XPE) eine Untergruppe der vernetzten Polyolefine (XPO) darstellt.

Das Spritzgussteil besteht vorzugsweise aus einem sogenannten thermoplastische Vulkanisat (TPE-V, auch TPV). Hierbei handelt es sich allgemein um ein vernetztes thermoplastisches Elastomer.

Zu den thermoplastischen Elastomeren zählen im Allgemeinen auch folgende Materialien: TPE-A; TPE-U; TPE-S; TPE-O; TPE-E, die ebenfalls verwendet werden können. In Versuchen konnten jedoch die besten Ergebnisse mit dem TPV erzielt werden.

Die Kombination eines vernetztes Polyolefins mit einem thermoplastische Vulkanisat hat sich bei Untersuchungen als besonders geeignet herausgestellt.

Für die vorliegend beschriebene Leitungsverbindung sind grundsätzlich jedoch auch andere Materialkombinationen für das Material des Leitungsmantels und für das Material des Spritzgussteils möglich. So besteht beispielsweise der Leitungsmantel aus Silikon, insbesondere einem vernetzten Silikon. Derartige Silikon-Leitungen oder Silikonkabel zeichnen sich insbesondere auch durch eine hohe Temperaturbeständigkeit aus. Als Silikonmaterial wird beispielsweise ein modifizierter Siliconkautschuk (SiR), insbesondere mit einer Kurzzeittemperaturbeständigkeit von bis zu 250 °C (und einer Dauertemperaturbeständigkeit von z.B. 180°C) eingesetzt.

Wie zuvor bereits ausgeführt, ist insbesondere bei der Verwendung von Silikon vor dem Aufbringen des Spritzgussteils bevorzugt ein Vorbereitungsschritt beispielsweise in Form einer Bestrahlung oder Plasmabehandlung vorgesehen, um die Haftung zu erhöhen.

Für das Gussmaterial werden alternativ zu dem thermoplastischen Vulkanisat andere thermoplastische Elastomere wie z.B. TPE-S (Styrol-Block-Copolymere), TPE-E (Thermoplastisches Copolyester-Elastomere), TPE-O (thermoplastisches Polyolefin), TPE- A (thermoplastisches Polyamid) sowie TPE-U (thermoplastische Polyurethan) eingesetzt.

In bevorzugter Ausgestaltung bildet das Spritzgussteil einen äußeren Dichtmantel aus. Hierunter wird verstanden, dass das Spritzgussteil selbst mit der äußeren Umgebung unmittelbar in Kontakt tritt und beispielsweise nicht von einem zusätzlichen Gehäusebauteil umgeben ist.

In bevorzugter Ausgestaltung liegt das Spritzgussteil darüber hinaus auch unmittelbar an den miteinander verbundenen und abisolierten Leitern an. Der gesamte Kontaktbereich, in dem die Leiter miteinander verbunden sind, ist daher unmittelbar in der Gussmasse und damit im Spritzgussteil eingebettet. Dies hat insbesondere auch den Vorteil, dass Kontakt- und Verbindungsteile, die häufig Hinterschnitte aufweisen, von dem Gussmaterial umflossen werden, so dass eine besonders gute mechanische Befestigung des Spritzgussteils erreicht wird. Zusätzliche Einhausungen, Gehäuseteile, Umhüllungen oder Bandierungen um den Kontaktbereich sind vorzugsweise nicht verwendet. Der Verbindungsbereich ist daher frei von solchen zusätzlichen Elementen.

Bevorzugt ist die Leitungsverbindung - abgesehen von dem Spritzgussteil - frei von (weiteren) Dichtungselementen und das aufgespritzte Spritzgussteil bildet die einzige Maßnahme zur Erzielung der Längswasser-Abdichtung. Es wird daher auf sonstige herkömmliche Gehäuseteile oder separate Dichtelemente, wie Dichtringe, durch die die jeweilige Leitung geführt ist, verzichtet. Ein Vorteil des Verzichts auf solche zusätzlichen Dichtelemente ist u.A. auch darin zu sehen, dass solche Elemente entsprechend auch nicht während der Montage oder des Betriebs verrutschen können, wodurch die Fehleranfälligkeit erhöht ist. Zudem ist ein Spritzgussprozess auch einfach umzusetzen. Insbesondere ist auch auf eine (Dichtungs-) Bandierung verzichtet, die beispielsweise für eine bessere Haftung zwischen dem Material des Leitungsmantels und dem Material des Spritzgussteil sorgen soll.

Grundsätzlich besteht die Möglichkeit, dass weitere sonstige Elemente, die nicht zur Abdichtung dienen, insbesondere Versteifungsteile, mit angebracht werden, um beispielsweise die mechanischen Eigenschaften in geeigneter Weise einzustellen. Dies wird beispielsweise durch Anspritzen oder auch durch steife Einlegeteile erreicht, um z.B. eine gewünschte mechanische Steifigkeit und beispielsweise einen Knickschutz zu erreichen.

Bevorzugt ist jedoch auf derartige ergänzende Elemente ebenfalls verzichtet, sodass also die Leitungsverbindung ausschließlich gebildet ist durch die im Verbindungsbereich elektrisch miteinander kontaktierten Leitern (ggf. mit einem Leiterblech, über welches die Leiter miteinander verbunden sind), den Endabschnitten der Leitungen und dem Spritzgussteil.

Bevorzugt weist der im Spritzgussteil eingebettete Endabschnitt einer jeweiligen Leitung eine Länge von zumindest 30 mm, und vorzugsweise von zumindest 50 mm oder auch von zumindest 80 mm auf. Je nach Variante, insbesondere in Abhängigkeit eines Leitungsdurchmessers variiert diese Länge des Endabschnitts. Allgemein gilt, dass mit zunehmendem Leitungsdurchmesser und speziell Leiterdurchmesser die Länge vorzugsweise größer wird. Die bevorzugte Länge von zumindest 50 mm wird beispielsweise für Leitungen mit einem Leiter mit einer Querschnittsfläche von 6mm² eingesetzt. Durch eine solche Mindestlänge ist die gewünschte Längswasser-Abdichtung zuverlässig gewährleistet. Über diese Länge liegt das Spritzgussteil daher unmittelbar am Leitungsmantel an.

Die Länge des im Spritzgussteil eingebetteten Endabschnitts liegt weiterhin vorzugsweise bei maximal 100 mm und insbesondere bei maximal 90 mm. Häufig liegt sie insbesondere bei Leitungen mit einem Leiterquerschnitt von beispielsweise bis zu 8 mm² oder auch bis zu 95 mm² bei maximal 80 mm.

In bevorzugter Ausgestaltung weist das Spritzgussteil eine Wanddicke im Bereich von 3 mm bis 15 mm und vorzugsweise bis maximal 10 mm auf. Bevorzugt liegt die Wanddicke im Bereich zwischen 3 mm bis 5 mm und in Teilbereichen beispielsweise auch bis 8 mm. Insbesondere liegt die Wanddicke bei zumindest 5mm. Hierdurch ist eine ausreichende elektrische Isolierung speziell auch bei den hier im Vordergrund stehenden Hochvolt-Leitungen erreicht. Unter der Wanddicke wird vorliegend bevorzugt ein mittlere Wanddicke verstanden, die sich in Umfangsrichtung ergibt. Zur Bestimmung der mittleren Wanddicke werden daher die Abstände zwischen den im Spritzgussteil eingebetteten Elementen und einer Außenseite des Spritzgussteils um den Umfang herum ermittelt und daraus der Mittelwert gebildet.

Bedingt durch den Spritzgussprozess können sich die in der Werkzeugform einliegenden Endabschnitte oder auch der Verbindungsbereich etwas seitlich verschieben, so dass auf der einen Seite sich eine etwas höhere Wanddicke als auf der anderen Seite einstellt.

Die hier vorgesehene Mindest-Wanddicke von z.B. 5mm ist für Spritzgussprozesse ungewöhnlich hoch. Durch diese hohe Wanddicke wird die sichere elektrische Isolierung gewährleistet. Ein entscheidender Vorteil dieser hohen Wandstärke ist weiterhin jedoch auch darin zu sehen, dass hierdurch die absolute Schwindung hoch ist und dass durch diese hohe Schwindung beim Spritzgießprozess das Spritzgussteil stark gegen den jeweiligen Leitungsmantel gepresst wird, wodurch die Dichtwirkung entscheidend unterstütz wird. Gleichzeitig wird durch die geringe Viskosität trotz der hohen Wanddicke eine lunkerfreie Ausgestaltung erreicht. Für eine derartige lunkerfreie Ausgestaltung werden insbesondere auch weitere Verfahrensparameter geeignet gewählt, wi z.B. der Verzicht auf Füllmaterialien wie z.B. Glasfaser oder Ruß usw.. Auch wird dies durch eine geeignete Temperatur- und Druckwahl, insbesondere eines Nachdrucks nach dem Einspritzen unterstützt.

Eine minimale, geringste Wanddicke des Spritzgussteils, also der geringste Abstand zwischen den im Spritzgussteil eingebetteten Elementen und einer Außenseite des Spritzgussteils kann daher unter dem Wert für die mittlere Wanddicke, beispielsweise maximal 2mm unter diesem Wert liegen. Im Kontaktierungsbereich wird vorzugsweise eine etwas höhere Wanddicke eingesetzt, um ein Verschieben des Kontaktierungsbereichs (auch als Schweißknoten bezeichnet) zu vermeiden.

Die Endbereiche der Spritzgussteils, also Eintrittsabschnitte des Spritzgussteils, an denen die jeweilige Leitung eintritt, sind vorzugsweise abgerundet oder konisch zulaufend ausgebildet. Hierdurch wird insbesondere auch eine gute mechanische Widerstandsfähigkeit mit einer geringen Angriffsfläche erreicht, speziell gegenüber einem Wasserdruck bei einer Dichtigkeitsprüfung beispielsweise gemäß IPX9k nach ISO 20653.

Der Kontaktbereich und damit der Verbindungsbereich zwischen den Leitern ist vorzugsweise durch eine insbesondere blanke Splice-Verbindung und/oder eine Schweißverbindung der Leiter ausgebildet. Die Leiterverbindung zwischen den Leitern ist daher mit geringem Aufwand und mit geringem Materialeinsatz und damit kostengünstig hergestellt.

Bei einer herkömmlichen Splice-Verbindung werden die einzelnen Litzenleiter des Leiters miteinander verspleißt, also mechanisch in geeigneter Weise insbesondere durch einen Pressvorgang miteinander verbunden, wobei dies insbesondere auch durch einen Schweißprozess oder einen Lötvorgang unterstützt ist. Alternativ sind die Leiter (lediglich) durch einen Schweißprozess oder Lötprozess unmittelbar miteinander verbunden. In einer weiteren Alternative sind die Leiter mittelbar über ein gemeinsames Leiterblech verbunden, auf welches die Leiter jeweils bevorzugt mittels Schweißens oder Lötens befestigt sind.

Grundsätzlich besteht auch die Möglichkeit, dass im Verbindungsbereich die Leiter mechanisch über Anschlussterminals, beispielsweise über Schraubenverbindungen, z.B. mit Hilfe von Kabelschuhen miteinander verbunden sind. Bevorzugt ist jedoch auf derartige Anschlussterminals verzichtet und es liegt lediglich eine direkte Leiterverbindung vor, also über eine herkömmliche Splice-Verbindung oder ergänzend/alternativ über eine stoffschlüssigen Verbindung (Schweißen/Löten), wie dies zuvor beschrieben wurde.

Im Verbindungsbereich sind typischerweise keine weiteren Bauteile, wie z.B. Sicherungsbauteile (Überstromsicherung) angeordnet.

Aufgrund des Spritzguss-Prozesses und der erforderlichen Spritzgussform und dem Spritzdruck muss für den Spritzguss-Prozess eine Abdichtung zwischen der Spritzgussform und den aus dieser austretenden Leitungen erreicht werden. Hierzu ist unter anderem auch erforderlich, dass die Spritzgussform mit einem gewissen Druck gegen den Leitungsmantel gepresst wird. Hierbei besteht die Gefahr, dass dieser beschädigt werden kann.

Um insbesondere eine Verletzung des Leitungsmantels und vorzugsweise ergänzend ein Herausfließen des Gussmaterials möglichst zu vermeiden, wird in bevorzugter Ausgestaltung der Leitungsmantel von einem Leitungsschutzelement, insbesondere einer Bandierung umgeben, welches also zum mechanischen Schutz der Leitung vor einer Beschädigung durch die Spritzgussform bei der Herstellung des Spritzgussteil dient. Dieses Leitungsschutzelement weist lediglich eine begrenzte Länge auf und ist insbesondere lediglich in einem Bereich angeordnet, an dem die Spritzgussform an dem Leitungsmantel beim Gießprozess anliegt. Typischerweise dringt dieses Leitungsschutzelement und speziell die Bandierung etwas in das Innere der Gussform ein, sodass also nach dem Entformen lediglich/allenfalls ein Teilabschnitt des Leitungsschutzelements von einem Endbereich des Spritzguss Bauteils umgeben ist. Bis auf diese optionale Bandierung als mechanischer Schutz ist allgemein auf Bandierungsmaßnahmen verzichtet. Weder im (restlichen) Kontaktbereich zwischen dem Leitungsmantel und dem Spritzgussteil noch im Verbindungsbereich ist eine Bandierung ausgebildet.

Die Länge dieses Leitungsschutzelements in Längsrichtung der jeweiligen Leitung liegt beispielsweise im Bereich zwischen dem Einfachen und dem Dreifachen oder auch maximal dem Zweifachen einer Wandstärke einer Wand der Spritzgussform, die am Leitungsmantel beim Spritzguss-Prozess anliegt. Das Leitungsschutzelement erstreckt sich beispielsweise lediglich über einen Länge von maximal 3 cm, oder auch maximal 2 cm oder maximal 1 cm.

Allgemein ist das Leitungsschutzelement zum Großteil außerhalb des Spritzgussteils angeordnet, ist also nach dem Spritzguss-Vorgang von außen zugänglich und erkennbar. Unter "zum Großteil" wird verstanden, dass mehr als die Hälfte und insbesondere auch mehr als 3/4 des Leitungsschutzelements in Längsrichtung der Leitung betrachtet außerhalb des Spritzgussteils angeordnet ist.

Bevorzugt dringt das Leitungsschutzelement lediglich über wenige Millimeter, beispielsweise maximal 10 mm und insbesondere maximal 5 mm in das Spritzgussteil hinein. Insbesondere dringt es lediglich 1-2 mm in das Spritzgussteil hinein.

Die Aufgabe wird weiterhin erfindungsgemäß durch einen formstabilen Kabelsatz mit den Merkmalen des Anspruchs 13 gelöst. Dieser weist zumindest eine elektrische Leitung und insbesondere mehrere elektrische Leitungen auf, wobei die zumindest eine Leitung einen Leitungsmantel aufweist oder von einem Leitungsmantel umgeben ist, welcher aus einem Mantelmaterial besteht, welches ausgewählt ist aus einem vernetzten Polyolefin und einem vernetzten Silikon. Zumindest ein Abschnitt des Kabelsatzes weist eine durch ein aufgespritztes Spritzgussteil ausgebildete Ummantelung auf, die insbesondere unmittelbar an dem Leitungsmantel anliegt, wobei das Spritzgussteil (14) aus einem thermoplastischen Elastomer besteht.

Die zuvor im Hinblick auf die Leitungsverbindung angeführten Vorteile und bevorzugten Ausgestaltungen im Hinblick auf die Materialkombination zwischen Leitungsmantel und Spritzgussteil oder die bevorzugte Wanddicke des Spritzgussbauteils gelten gleichermaßen für den Kabelsatz.

Die zuvor beschriebene Leitungsverbindung ist vorzugsweise, jedoch nicht zwingend ein solcher Kabelsatz oder ein Teil des Kabelsatzes.

Durch die Umspritzung mit dem Spritzgussbauteil wird zumindest abschnittsweise eine Verstärkung und dadurch eine Formstabilität erreicht. Der Kabelsatz weist beispielsweise mehrere, ein Leitungsbündel bildende Leitungen auf, von denen ein oder mehrere mit einem Leitungsmantel aus dem Mantelmaterial versehen sind. Das Spritzgussteil ist beispielsweise um dieses Leitungsbündel herum ohne weiteren Zwischenmantel angebracht.

In bevorzugter Ausgestaltung ist das Leitungsbündel jedoch von einem gemeinsamen Leitungsmantel aus dem Mantelmaterial umgeben und das Spritzgussteil ist auf diesen gemeinsamen Leitungsmantel aufgespritzt.

Bei dem Kabelsatz handelt es sich beispielsweise um einen verzweigten Kabelsatz mit einem Hauptstrang, von dem ein oder mehrere Nebenstränge abzweigen, wobei ein jeder Strang ein oder mehrere Leitungen aufweist. Insbesondere im Bereich von Abzweigungen ist beispielsweise das Spritzgussbauteil angebracht.

Durch die Formstabilität weist der Kabelsatz insbesondere bereits eine vordefinierte, insbesondere 3-dimensionale Verlegestruktur auf, d.h. durch das Spritzgussteil wird ein vordefinierter, insbesondere ein nicht geradliniger Verlauf eingestellt.

Der besondere Vorteil hierbei ist, dass auch bei solchen kritischen Materialkombinationen auf Haftvermittler und Zwischenlagen verzichtet werden kann und verzichtet ist.

Ein Ausführungsbeispiel der Erfindungen wird nachfolgend anhand der Figuren näher erläutert. Diese zeigen in vereinfachten Darstellungen:
- FIG 1: eine Schnittdarstellung durch eine Leitungsverbindung mit einer ausschnittsweise angedeuteten Spritzgussform,
- FIG 2: eine Stirnansicht auf die Leitungsverbindung auf die linke Seite gemäß FIG 1 sowie
- FIG 3: eine Stirnansicht auf die Leitungsverbindung auf die rechte Seite gemäß FIG 1.

Eine in den Figuren dargestellte Leitungsverbindung 2 ist im Ausführungsbeispiel nach Art eines Y-Verbinders ausgebildet und umfasst insgesamt drei elektrische Leitungen 4, die jeweils als einadrige Mantelleitungen ausgebildet sind. Die Leitungsverbindung 2 bildet zugleich einen Kabelsatz aus oder ist Teil eines solchen.

Die Leitungen 4 weisen jeweils einen zentralen, als Litzenleiter ausgebildeten Leiter 6 auf, welcher im Ausführungsbeispiel unmittelbar von einem Leitungsmantel 8 umgeben ist, welcher einen äußeren Schutzmantel bildet. Die Leitungen 4 sind daher als ungeschirmte Leitungen ausgebildet. Alternativ besteht auch die Möglichkeit, dass ergänzend noch eine Schirmlage und ein zusätzlicher isolierender Zwischenmantel angebracht sind.

Im Ausführungsbeispiel weisen die drei Leitungen 4 jeweils unterschiedliche Leiterdurchmesser auf. Die Leitung 4 mit dem größten Durchmesser des Leiters 6 dient beispielsweise als Einspeiseleitung und die weiteren Leitungen 6 dienen als abgehende Leitungen 6.

Alternativ zu einem Y-Verbinder (Verteiler) können grundsätzlich auch andere Ausführungsvarianten ausgebildet sein, wie beispielsweise ein H-Verbinder (Verteiler) oder, ein Mehrfach-Verteiler mit mehr als drei oder auch mehr als vier Leitungen 4 und beispielsweise mit fünf Leitungen 4 usw..

In einem jeweiligen Endbereich des Leiters 4 ist der jeweilige Leiter 6 abisoliert und die Leiter 6 sind in einem Verbindungsbereich 10 speziell über eine Schweißverbindung miteinander verbunden. Bei dem Verbindungbereich 10 handelt es sich vorliegend daher um einen reinen metallischen Kontaktierungsbereich ohne weitere Umhüllungen oder Umhausungen, in dem blanke Kontaktabschnitte der Leiter 6 miteinander elektrisch kontaktiert und insbesondere verschweißt sind.

Dieser Verbindungsbereich 10 sowie ergänzend ein jeweiliger Endabschnitt 12 einer jeweiligen Leitung 4 sind in einem Spritzgussteil 14 eingebettet und von diesem umgeben.

In einem jeweiligen Endbereich des Spritzgussteils 14, und zwar jeweils in einem Eintrittsbereich, wo die jeweilige Leitung 4 in das Spritzgussteil 14 eindringt, ist die Leitung 4 jeweils von einem bevorzugt als Bandierung 16 ausgebildeten Leitungsschutzelement umgeben. Dieses dringt nur über ein geringes Teilstück in das Spritzgussteil 14 hinein. Ein Großteil, und vorzugsweise mehr als ¾ dieses Leitungsschutzelements liegen außerhalb des Spritzgussteils 14.

Der Endabschnitt 12 des Leitungsmantels 8, welcher also innerhalb des Spritzgussteils 14 angeordnet ist, weist eine Länge L1 (in Längsrichtung der jeweiligen Leitung 4 betrachtet) vorzugsweise im Bereich von beispielsweise 50 mm bis 80 mm auf.

Die Bandierung 16 weist demgegenüber eine deutlich geringere Länge L2 auf, die beispielsweise lediglich im Bereich von 10 mm bis 20 mm liegt. Von dieser gesamten Länge L2 dringt lediglich eine geringe Teillänge L3 in das Spritzgussteil 14 hinein, wobei die Teillänge L3 bevorzugt bei kleiner 5 mm liegt und beispielsweise 1-2 mm beträgt.

Das Spritzgussteil 14 weist weiterhin eine Wanddicke D im Bereich von vorzugsweise 3 mm bis 10 mm auf. Die Wanddicke D liegt insbesondere bei größer oder gleich 5mm, zumindest im Mittel um den Umfang betrachtet. Die Mindestwanddicke liegt bevorzugt zumindest bei 3mm.

Der Leitungsmantel 8 der jeweiligen Leitung 4 besteht im Ausführungsbeispiel aus einem strahlvernetzten Polyolefin und das Spritzgussteil 14 besteht aus einem thermoplastischen Vulkanisat (TPE-V).

Im Ausführungsbeispiel ist in die Außenseite des Spritzgussteils 14 noch eine Verprägung oder allgemein eine Vertiefung 18, beispielsweise in Form einer Nut eingebracht. Über diese werden beispielsweise mehrere derartige Leitungsverbindungen 2 aneinander - beispielsweise mithilfe von Kabelbinder - fixiert und gegen ein Verrutschen gesichert. Insbesondere wird ein Leitungsverbinder 2 einer Plusleitung (auf positivem Spannungspotential) mit einem Leitungsverbinder 2 einer Minus- oder Masseleitung (auf negativem Spannungspotential / Massepotential) miteinander verbunden.

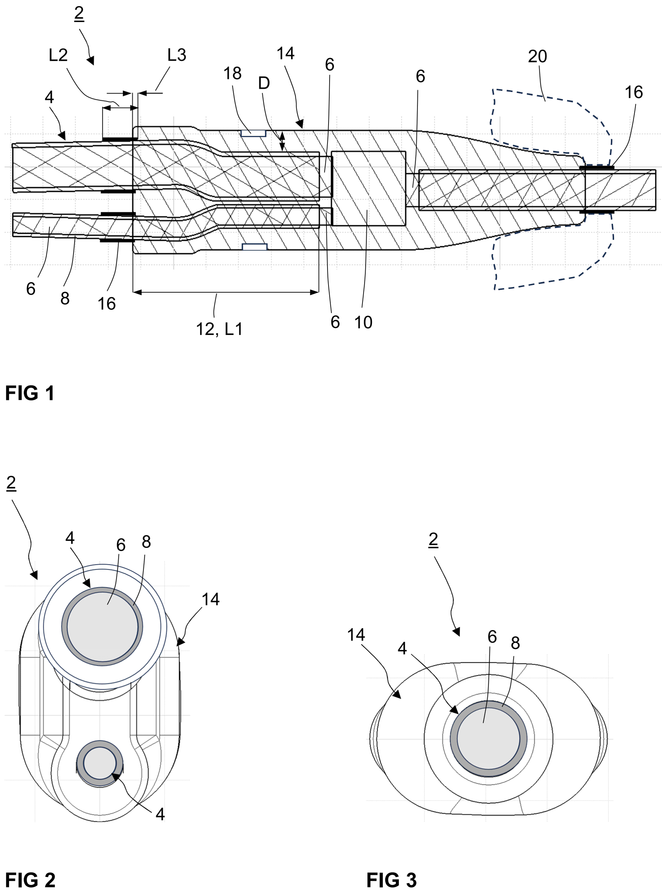

Bei der Herstellung der Leitungsverbindung 2 werden zunächst die einzelnen Leiter 6 endseitig abisoliert und elektrisch miteinander kontaktiert, insbesondere durch Ausbilden einer geschweißten Splice-Verbindung. Eventuell abstehende einzelne Litzendrähte werden abgetrennt. Die derart vorbereitete Baugruppe wird anschließend in eine in Figur 1 nur ausschnittsweise und gestrichelt angedeutete Spritzgussform 20 eingelegt und anschließend wird die Spritzgussmasse mit vorgegebener Verarbeitungstemperatur und vorgegebenem Spritzdruck eingebracht. Vor dem Einlegen der Baugruppe in die Spritzgussform bzw. vor Schließen der Spritzgussform 20 wird an einer jeweiligen Leitung 4 die Bandierung 16 zum Schutz des Leitungsmantels 8 angebracht, und zwar lediglich an einer Position, an der ein Wandbereich der Spritzgussform 20 beim Spritzguss-Prozess anliegt. Für die Bandierung 16 wird hierbei beispielsweise ein herkömmliches Band verwendet, wie es zu Bandierungszwecken in der Kabelsatzherstellung allgemein bekannt ist.

Bei Bedarf werden Verstärkungselemente, beispielsweise in Form von Knickschutzelementen eingebracht. Diese werden beispielsweise als Einlegeteile in die Spritzgussform 20 eingelegt oder alternativ vorab an der Baugruppe angebracht. Alternativ werden solche Verstärkungselemente oder Verstärkungsbereiche mit angespritzt.

Um eine gute Verteilung der Gussmasse beim Spritzguss-Prozess zu gewährleisten, wird vorzugsweise - beispielsweise durch eine geeignete Ausgestaltung der Spritzgussform 20 - die Gussmasse schneckenförmig oder spiral- / schraubenförmig in die Spritzgussform 20 eingebracht, sodass insgesamt eine gleichmäßige und homogene Verteilung der Gussmasse um die einliegenden Baugruppe erreicht ist. Hierzu ist beispielsweise eine Einspritzöffnung an der Spritzgussform 20 geeignet angeordnet, z.B. nach außen versetzt gegenüber einem Leitungs(bündel)mittelpunkt, so dass das Gussmaterial dann automatisch quasi schneckenförmig um die Leiter herumfließt.

Im Endzustand liegt die Gussmasse und damit das Spritzgussteil 12 unmittelbar einerseits an dem jeweiligen Leitungsmantel 8 aber auch an den blanken Leitern 6 und speziell der Schweißverbindung an.

Durch die Bedingungen beim Spritzguss-Prozess wird eine Flächenerpressung erhalten, welche insbesondere auch unter Berücksichtigung der Länge L1 des Endabschnitts 12 zu einer ausreichenden Adhäsion der Gussmasse an dem Leitungsmantel 8 führt, sodass eine zuverlässige Längswasser-Abdichtung erreicht ist und zwar insbesondere ohne weitergehende Maßnahmen und ohne sonstige Bauteile für Dichtzwecke, wie beispielsweise ein Dichtungs-Tape, ein Dichtring, eine Verschlusskappe oder sonstige Gehäuseteile usw., wie sie herkömmlicherweise eingesetzt werden.

Durch die Bedingungen bei dem Spritzguss-Prozess sind als weiterer Vorteil insbesondere Freiräume, auch als Lunker bezeichnet, vermieden, was sich positiv im Hinblick auf die elektrischen Eigenschaften auswirkt.

Die Leitungsverbindung 2 ist insbesondere Teil eines Kraftfahrzeug-Bordnetzes, also im montierten Zustand in einem insbesondere elektrisch antreibbaren Kraftfahrzeug, wie z.B. ein PKW oder ein LKW, angeordnet. Die Leitungsverbindung 2 ist insbesondere Teil einer Versorgungsleitung, insbesondere einer Gleichstromleitung, über die Hochvolt-Komponenten miteinander verbunden sind. Bei diesen Hochvolt-Komponenten handelt es sich beispielsweise um eine Fahrbatterie, einen elektrischen Fahrmotor, einen Wechselrichter und / oder eine Sicherungsbox oder Verteilerbox.

Die hier beschriebene Leitungsverbindung 2 und das Verfahren zu ihrer Herstellung zeichnen sich insbesondere durch die Kombination von mehreren Merkmalen aus, die in Summe zuverlässig gewährleisten, dass trotz des Mantelmaterials aus einem vernetzten Material eine zuverlässige Abdichtung erzielt wird.

Hervorzuheben sind insbesondere folgende Maßnahmen:
Bevorzugte Verwendung eines TPE-V als thermoplastisches Elastomer für das Spritgussteil 14, welches insbesondere polarmodifiziert, haftungsmodifiziert ist und eine hohe Strukturviskosität aufweist.

Vergleichsweise große Wanddicke D, wodurch insbesondere eine hohe absolute Schwindung und damit eine hohe Presskraft zwischen dem Spritzgussteil 14 und dem Mantelmaterial erreicht ist.

Es liegt lediglich eine adhäsive Anbindung des Spritzgussteils 14 am Leitungsmantel 8 vor und keine chemische oder stoffschlüssige Verbindung.

Durch eine große Länge L1, an dem das Spritzgussteil 14 am Leitungsmantel 8 anliegt, wird die sichere Abdichtung gewährleistet.

Beim Verfahren werden hohe Spritztemperaturen und hohe Spritzdrücke wie angegeben verwendet. In Verbindung mit der hohen Strukturviskosität führt dies zu einer geringen Viskosität und damit einem vollständigen Füllen der Werkzeugform frei von Lufteinschlüssen, und dies trotz der hohen Wandstärken.

### Bezugszeichenliste

- 2: Leitungsverbindung
- 4: Leitung
- 6: Leiter
- 8: Leitungsmantel
- 10: Verbindungsbereich
- 12: Endabschnitt
- 14: Spritzgussteil
- 16: Bandierung
- 18: Vertiefung
- 20: Spritzgussform

- L1: Länge des Endabschnitts
- L2: Länge der Bandierung
- L3: Teillänge
- D: Wanddicke

## Patentansprüche

1. Leitungsverbindung (2) von zumindest zwei elektrischen Leitungen (4), insbesondere Hochvolt-Leitungen (4) eines Kraftfahrzeugs, wobei die Leitungen (4) jeweils einen Leiter (6) sowie einen diese umgebenden Leitungsmantel (8) aus einem Mantelmaterial aufweisen, wobei das Mantelmaterial ausgewählt ist aus einem vernetzten Polyolefin und einem vernetzten Silikon, wobei in einem Verbindungsbereich (10) die Leitungen (4) abisoliert und die Leiter (6) miteinander elektrisch leitend verbunden sind, wobei der Verbindungsbereich (10) und jeweils ein Endabschnitt (12) des Leitungsmantels (8) in einem aufgespritzten Spritzgussteil (14) aus einem thermoplastischen Elastomer eingebettet sind, wobei das Spritzgussteil (14) dichtend an dem Endabschnitt (12) des Leitungsmantels (8) anliegt und hierdurch eine Längswasser-Abdichtung erreicht ist.

2. Leitungsverbindung (2) nach einem der vorhergehenden Ansprüche, bei dem ein polarmodifizertes und / oder haftungsmodifiziertes thermoplastisches Elastomer für das Spritzgussteil (14) verwendet wird.

3. Leitungsverbindung (2) nach dem vorhergehenden Anspruch, wobei das Spritzgussteil (14) zumindest über weitgehend die gesamte Länge des Endabschnitts (12) am Leitungsmantel (8) unmittelbar anliegt.

4. Leitungsverbindung (2) nach einem der vorhergehenden Ansprüche, wobei das Mantelmaterial ein vernetztes Polyolefin ist.

5. Leitungsverbindung (2) nach einem der vorhergehenden Ansprüche, wobei das Spritzgussteil (14) aus einem thermoplastischen Vulkanisat (TPE-V) besteht.

6. Leitungsverbindung (2) nach einem der vorhergehenden Ansprüche, bei dem das Spritzgussteil (14) unmittelbar an den miteinander verbundenen, abisolierten Leitern (6) anliegt.

7. Leitungsverbindung (2) nach einem der vorhergehenden Ansprüche, welche frei von Dichtungselementen ist und das aufgespritzte Spritzgussteil (14) die einzige Maßnahme zur Erzielung der Längswasser-Abdichtung ist und auf Haftvermittler verzichtet ist.

8. Leitungsverbindung (2) nach einem der vorhergehenden Ansprüche, wobei der im Spritzgussteil (14) eingebettete Endabschnitt (12) eines jeweiligen Leitungsmantels (8) eine Länge (L1) von zumindest 30 mm und vorzugsweise von zumindest 50 mm aufweist, wobei die Länge (L1) vorzugsweise maximal 100 mm und insbesondere maximal 90 mm beträgt.

9. Leitungsverbindung (2) nach einem der vorhergehenden Ansprüche, bei dem das Spritzgussteil (14) eine Wanddicke (D) im Bereich von 3 mm bis 15 mm, bevorzugt von zumindest 5 mm und vorzugsweise bis maximal 10 mm aufweist.

10. Leitungsverbindung (2) nach einem der vorhergehenden Ansprüche, bei dem an einer jeweiligen Leitung (4) anschließend an das Spritzgussteil (14) der Leitungsmantel (8) von einem Leitungsschutzelement, insbesondere eine Bandierung (16), umgeben ist, welches zum mechanischen Schutz der Leitung (4) vor einer Beschädigung durch eine Spritzgussform (20) bei der Herstellung des Spritzgussteils (14) dient, wobei das Leitungsschutzelement allenfalls teilweise innerhalb des Spritzgussteils (14) einliegt.

11. Leitungsverbindung (2) nach dem vorhergehenden Anspruch, bei dem das Leitungsschutzelement zum Großteil außerhalb des Spritzgussteils (14) angeordnet ist, und es vorzugsweise nur einige Millimeter, insbesondere weniger als 5 mm in das Spritzgussteil (14) hinein reicht.

12. Leitungsverbindung (2) nach einem der vorhergehenden Ansprüche, bei dem
- das Spritzgussteil (14) aus einem thermoplastischen Vulkanisat (TPE-V) besteht, welches insbesondere polarmodifiziert und haftungsmodifiziert ist und eine hohe Strukturviskosität aufweist
- das Mantelmaterial aus einem vernetzten Polyolefin besteht, ,
- der im Spritzgussteil (14) eingebettete Endabschnitt (12) eines jeweiligen Leitungsmantels (8) eine Länge (L1) von zumindest 50mm aufweist,
- das Spritzgussteil (14) eine Wanddicke (D) von zumindest 5 mm aufweist.

13. Formstabiler Kabelsatz, insbesondere eine Leitungsverbindung (2) nach einem der vorhergehenden Ansprüche, mit zumindest einer elektrischen Leitung (4), die einen Leitungsmantel (8) aufweist oder von einem Leitungsmantel umgeben ist, wobei der Leitungsmantel (8) aus einem Mantelmaterial besteht, welches ausgewählt ist aus einem vernetzten Polyolefin und einem vernetzten Silikon, wobei zumindest ein Abschnitt des Kabelsatzes eine durch ein aufgespritztes Spritzgussteil ausgebildete Ummantelung aufweist, wobei das Spritzgussteil (14) aus einem thermoplastischen Elastomer besteht.

14. Verfahren zur Herstellung einer Leitungsverbindung (2) nach einem der Ansprüche 1 bis 12, bei dem zur Ausbildung des Spritzgussteils (14) der Verbindungsbereich (10) und die Endabschnitte (12) in eine Spritzgussform (20) eingelegt werden und anschließend das thermoplastische Elastomer eingespritzt wird.

15. Verfahren nach dem vorhergehenden Anspruch, bei dem
- das thermoplastische Elastomer mit einem Druck von > 200 bar, bevorzugt von >250 bar und
- mit einer Temperatur im Bereich zwischen 200°C und 250°C eingespritzt wird,
- das Spritzgussteil (14) mit einer Wanddicke (D) von zumindest 5mm ausgebildet wird,
- das ausgebildete Spritzgussteil (14) aufgrund des Druckes und einer Schwindung des thermoplastischen Elastomers beim Erkalten gegen den jeweiligen Endabschnitt (12) gepresst wird,
- der im Spritzgussteil (14) eingebettete Endabschnitt (12) eines jeweiligen Leitungsmantels (8) eine Länge (L1) von zumindest 50 mm aufweist,
- die Abdichtung zwischen dem Spritzgussteil (14) und dem jeweiligen Endabschnitt lediglich durch eine Flächenpressung und durch Adhäsion zwischen dem Spritzgussteil (14) und dem jeweiligen Endabschnitt (12) ausgebildet ist und dass auf weitere Bauteile zu Dichtungszwecken verzichtet ist und auch auf ein Aufbringen eines Haftvermittlers auf den jeweiligen Endabschnitt (12) oder eine chemische Aktivierung des jeweiligen Endabschnitts (12) sowie auf eine Bestrahlung oder Plasmabehandlung des jeweiligen Endabschnitts (12) verzichtet ist.
